Europäisches Patentamt

(19) European Patent Office

Office européen des brevets

(11) Publication number: **0 219 240**
**A1**

(12) # EUROPEAN PATENT APPLICATION

(21) Application number: **86307270.8**

(22) Date of filing: **22.09.86**

(51) Int. Cl.⁴: **F 16 H 3/08**

(30) Priority: **27.09.85 GB 8523860**

(43) Date of publication of application:
**22.04.87 Bulletin 87/17**

(84) Designated Contracting States·
**DE FR GB IT SE**

(71) Applicant: **Coste!'o Gears Ltd**
**3 Darns Hill Crocker hill**
**Swanley Kent BR8 8LO(GB)**

(72) Inventor: **Costello, Kenneth**
**3 Darns Hill Crockenhill**
**Swanley Kent BR8 8LO(GB)**

(74) Representative: **Matthews, Graham Farrah et al,**
**MATTHEWS HADDAN & CO Haddan House 33 Elmfield**
**Road**
**Bromley Kent BR1 1SU(GB)**

(54) **Transmission apparatus.**

(57) A power transmission apparatus comprises an input shaft (11) connected with a mainshaft (12), a layshaft (14, 15), an output shaft (13), gearwheels (22-27) including forward drive gearwheels on the mainshaft and output shaft, gearwheels on the layshaft, and means for changing the gearwheels through which power transmission is effected so as to change the transmission ratios.

The gearwheels on the mainshaft are permanently in mesh on driving connection with gearwheels (44-49) on the layshaft and are all mounted to rotate freely on the mainshaft (12). Means (18, 19, 20) are provided to clutch the gearwheels of the mainshaft selectively to the mainshaft.

EP 0 219 240 A1

./...

TITLE: TRANSMISSION APPARATUS

This invention relates to power transmission apparatus especially suitable for motor vehicles and of the kind having an input shaft connected with a mainshaft, a layshaft, an output shaft, gearwheels on the mainshaft meshing with gearwheels on the layshaft, and means for changing the gearwheels through which power transmission is effected so as to change the transmission ratios.

A common form of power transmission apparatus of this kind has a gearwheel fixed on the input shaft and permanently in mesh with a gearwheel on the layshaft so that when the engine clutch is engaged the mainshaft and layshaft with its gearwheels are constantly rotating. Consequently when a gear change is made the inertia of both the rotating mainshaft and layshaft must be changed with consequential forces on the synchromesh or other gear change devices.

An object of the present invention is to reduce the inertia forces to be overcome when making gear changes.

According to the present invention there is provided a power transmission apparatus comprising an input shaft connected with a mainshaft, a layshaft, an output shaft, gearwheels including forward drive gearwheels on the mainshaft and output shaft, gearwheels on the layshaft, means for changing the gearwheels through which power transmission is effected so as to change the transmission ratios, characterized in that said gearwheels on the mainshaft are permanently in mesh or driving connection with gearwheels on the layshaft, that the gearwheels on the mainshaft are all mounted to rotate freely on the mainshaft, and that means are provided to clutch the gearwheels of the mainshaft ·selectively to the mainshaft. In this manner the inertia of the layshaft has little or no effect on change of gear ratios. Since the layshaft is heavier than the mainshaft the advantage is considerable.

In a preferred form of the invention a plurality of hubs are fixed on the mainshaft and are each associated with two gearwheels of different sizes located either side of the hub and mounted on the mainshaft to rotate freely thereon. Synchromesh or other means are provided for connecting each hub with either of the two gearwheels.

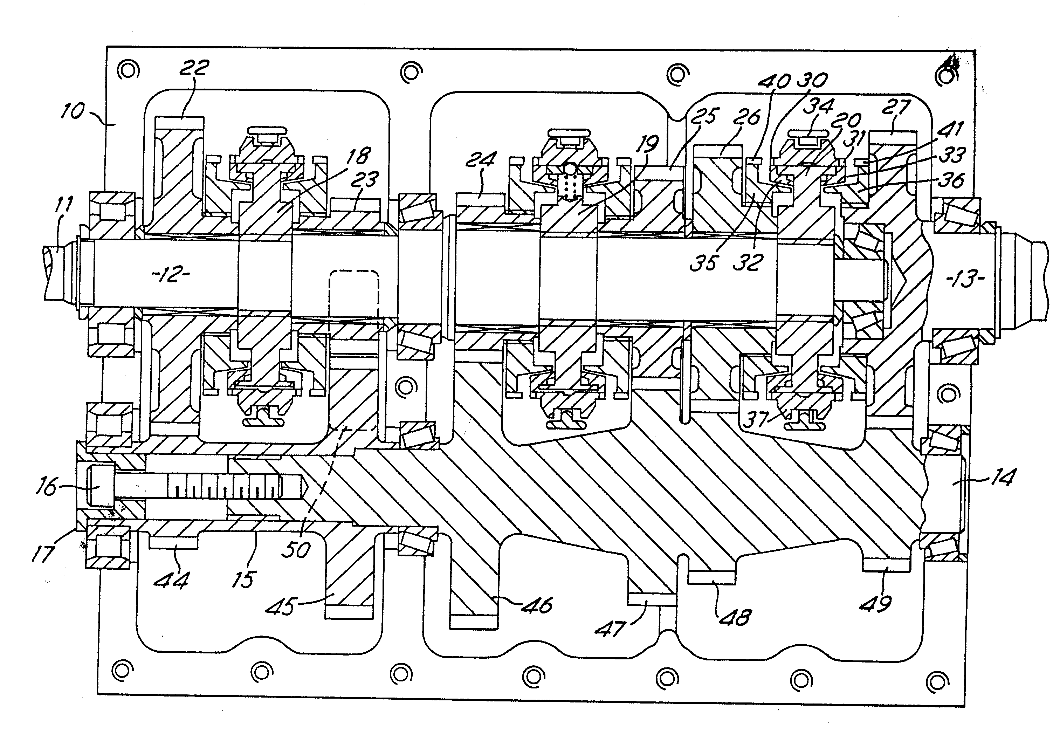

A constructional form of the invention will now be described by way of example with reference to the accompanying drawing which is a longitudinal vertical sectional view of a gearbox made in accordance with the invention.

The gearbox is similar to a conventional synchromesh gearbox having five forward speeds and a reverse drive.

The gear box has a housing 10, input shaft 11 fixed to a gear mainshaft 12, an output shaft 13 and a layshaft 14, 15. The layshaft is in two parts 14, 15 fixed together by screw 16 and block 17.

Fixed on the mainshaft are three hubs 18, 19, 20. On either side of each hub there are two gearwheels of different sizes viz 22, 23; 24, 25; and 26, 27 all of which are mounted on needle bearings for free rotation on the mainshaft.

Each hub carries synchromesh devices e.g. clutch dogs 30, 31 carried by a drive sleeve 37 splined to the hub, baulk rings 32, 33, selector fork 34 and drive flanges 35, 36 which are fixed to the adjacent gearwheels and carry corresponding clutch dogs 40, 41 engageable with 30, 31 respectively.

The layshaft 14, 15 has integral gearwheels 44, 46, 47, 48 and 49 in permanent mesh with the gearwheels 22, 24, 25, 26 and 27 respectively, the gearwheels 27 and 49 serving as the transmission drive between the layshaft and the output shaft. The reverse gearwheels 23 and 45 are both in mesh with a reversing gearwheel 50.

Transmission is as follows:-

First gear          24, 46
Second gear         25, 47
Third gear          26, 48

0219240

| Fourth gear | direct drive via dogs 31 and 41 |
| Fifth gear (overdrive) | 22, 44 |
| Reverse | 23, 50, 45 |

It will be seen that in the declutched positions illustrated in the drawing the mainshaft 12 with the hubs is entirely free from the layshaft and consequently on moving one of the selector forks to engage a clutch the synchro does not have to overcome the momentum of the layshaft but only the much smaller momentum of the mainshaft and hubs, which with the vehicle in motion will be speeded up or slowed down, prior to engaging the dogs.

The invention is not limited to a five speed gearbox but can be applied to a gearbox with any number of gear changes. The invention is also not limited to a synchromesh or baulk ring type of clutch although it is particularly suitable for such clutches.

I CLAIM:

1. A power transmission apparatus comprising an input shaft connected with a mainshaft, a layshaft, an output shaft, gearwheels including forward drive gearwheels on the mainshaft and output shaft, gearwheels on the layshaft, means for changing the gearwheels through which power transmission is effected so as to change the transmission ratios, characterized in that said gearwheels on the mainshaft are permanently in mesh or driving connection with gearwheels (44-49) on the layshaft, that the gearwheels (22-26) on the mainshaft are all mounted to rotate freely on the mainshaft (12), and that means are provided to clutch the gearwheels of the mainshaft selectively to the mainshaft.

2. A power transmission apparatus as claimed in claim 1, wherein the gearwheels include a reverse drive gearwheel (23) freely rotatable on the mainshaft and in permanent driving connection with a gearwheel on the layshaft.

3. A power transmission apparatus as claimed in claim 1 or 2, wherein the gearwheels (22-27) are arranged in pairs with a hub (18, 19,20) between each pair, and clutch means (30, 31; 32, 33; 35, 36; 37; 41, 41) are carried by the respective hub and adjacent gearwheels adapted to clutch either gearwheel of the

- 6 -

0219240

pair to the hub.

4. A power transmission apparatus as claimed in claim 3, having a gearwheel (27) of one of said pairs fixed on the output shaft (13) permanently in mesh with a gearwheel (49) on the layshaft.

5. A power transmission apparatus as claimed in claim 3 or 4, wherein the clutch means for each hub comprise dogs (30,31) on each side of a sleeve (37) which is slidably splined to the hub, and further dogs (40,41) carried by drive flanges (35,36) which are fixed to the gearwheels and engageable alternatively with the dogs (30,31) respectively on each side of the sleeve, and baulk rings (32, 33) respectively on each side of the hub.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 251 048 (OLIVER DOUGLAS SMITH) <br> * Page 1, line 59 - page 2, line 19; figure 3 * | 1,3,4 | F 16 H 3/08 |
| A | | 5 | |
| | --- | | |
| A | US-A-3 115 047 (R.C. LUNN) <br> * Figure 1 * | 5 | |
| | --- | | |
| A | US-A-4 297 906 (COSTELLO) <br> * Column 2, lines 7-9; figure 1 * | 2 | |
| | ----- | | |

TECHNICAL FIELDS
SEARCHED (Int. Cl.4)

F 16 H

The present search report has been drawn up for all claims

| Place of search | Date of completion of the search | Examiner |
|---|---|---|
| THE HAGUE | 11-12-1986 | BEERNAERT J.E. |